# EUROPÄISCHE PATENTSCHRIFT

(11) **EP 0 636 532 B1**
(45) Veröffentlichungstag und Bekanntmachung des Hinweises auf die Patenterteilung: **02.10.1996**
(21) Anmeldenummer: 94108928.6
(22) Anmeldetag: 10.06.1994
(51) Int. Cl.: B62D 33/06

(54) **Vordere Lagerung für ein kippbares Fahrerhaus eines Lastkraftwagens**
Front bearing for a tilt cab truck
Palier avant pour la cabine basculante d'un camion

(30) Priorität: 23.07.1993 AT 1473/93
(43) Veröffentlichungstag der Anmeldung: 01.02.1995
(73) Patentinhaber: STEYR NUTZFAHRZEUGE AG, A-4400 Steyr (AT)
(72) Erfinder: Wenzl, Kurt, Dipl.-Ing., A-4048 Puchenau (AT); Beidl, Ekkehart, A-4400 Steyr (AT)

(56) Entgegenhaltungen:
- EP-A- 0 355 346
- DE-A- 2 229 436
- DE-A- 4 300 757

## Beschreibung

Die Erfindung betrifft eine vordere Lagerung für ein kippbares Fahrerhaus eines Lastkraftwagens, mit wenigstens zwei am Fahrzeugrahmen befestigten Lagerkonsolen, an denen das Fahrerhaus über auf zueinander fluchtenden Lagerachsen angeordnete elastische Lager abgestützt ist, die in am Fahrerhaus-Boden befestigten Lagerschalen aufgenommen sind.

Der Erfindung liegt dabei folgende Problematik zugrunde. Bei vorderen Fahrerhaus-Lagerungen der gattungsgemäßen Art, wie an serienmäßigen STEYR-Lastkraftwagen des Typs BR 92 verwendet, sind, um einen hinreichenden Federungskomfort sicherzustellen, die elastischen Lager relativ weich ausgelegt. Beim Kippen des Fahrerhauses bewirkt dies unter der Krafteinwirkung eines zunächst relativ flach angreifenden hydraulischen Kippzylinders ein Verschieben des Fahrerhauses nach vorne und damit ein relativ starkes Verformen der elastischen Lager. Diese Verformung wird beim Kippen des Fahrerhauses nach Überschreiten des Totpunktes noch verstärkt, weil dann zudem das Gewicht des Fahrerhauses wirksam ist. Um Beschädigungen der elastischen Lager aufgrund der vorgenannten Belastungen zu vermeiden, sind die elastischen Lager bisher durch eine entsprechende Materialwahl und innere Querschnittsform auf eine begrenzte Elastizität ausgelegt gewesen. Je nach Größe und Gewicht des Fahrerhauses und der damit einhergehenden Kraft, die für dessen Kippen erforderlich ist, kann eine solche Auslegung der elastischen Lager jedoch zu einem verminderten Federungskomfort führen, was bisher aber als brauchbarer Kompromiß in Kauf genommen wurde.

Es ist daher Aufgabe der Erfindung, eine vordere Fahrerhaus-Lagerung der gattungsgemäßen Art so auszubilden, daß einerseits vergleichsweise weiche, einen guten Federungskomfort des Fahrerhauses sicherstellende elastische Lager verwendet werden können, andrerseits aber die vorstehend geschilderten Probleme beim Kippen des Fahrerhauses nicht mehr auftreten können.

Diese Aufgabe ist erfindungsgemäß dadurch gelöst, daß im Bereich eines Fahrerhaus-Lagers ein ortsfest in Bezug auf den Fahrerhaus-Boden angeordneter Anschlag vorgesehen ist, der mit seiner Anschlagfläche bei in Fahrstellung befindlichem Fahrerhaus die Lagerachse bzw. ein diese umgebendes Zentralrohr des elastischen Lagers mit geringem Abstand derart hintergreift, daß er das Einfedern des Fahrerhauses nicht behindert, aber beim Kippvorgang des Fahrerhauses zusammen mit diesem unter der Krafteinwirkung eines Kippzylinders in dessen Kraftrichtung verschiebbar ist, nach kurzer Wegstrecke an der Lagerachse bzw. dem Lager-Zentralrohr zur Anlage kommt und dort beim Weiterkippen des Fahrerhauses abgestützt bleibt.

Vorteilhafte Ausgestaltungen dieser erfindungsgemäßen Lösung sind in den Unteransprüchen gekennzeichnet. Dabei kann der Anschlag durch ein außen an der Lagerschale angeordnetes Stützblech gebildet sein, das wiederum entweder einstückig mit der Lagerschale ausgebildet oder als vorgefertigtes Einzelteil an der Lagerschale befestigbar, entweder anschweißbar oder anschraubbar ist. Alternativ hierzu kann der Anschlag auch durch ein Stützblech gebildet sein, das als Teil eines Stützbügels zusammen mit der Lagerschale am Fahrerhaus-Boden befestigt ist.

Generell ist der Abstand zwischen Anschlagfläche am Anschlag und Außenkontur der Lagerachse bzw. Zentralrohr des elastischen Lagers, an der er beim Kippen des Fahrerhauses zur Anlage kommt, bei in Fahrstellung befindlichem Fahrerhaus kleiner/gleich dem konstruktiv vorgegebenen zulässigen Verformungsweg des elastischen Lagers. Die erfindungsgemäße Lösung erlaubt daher die Verwendung vergleichsweise weicher elastischer Lager, die einen sehr hohen Federungskomfort des Fahrerhauses sicherstellen. Andrerseits ist trotz solcher weicher elastischer Lager mit der erfindungsgemäßen Lösung sichergestellt, daß diese beim Kippen des Fahrerhauses nicht über einen für zulässig erachteten Wert hinaus verformt und belastet werden. Der erfindungsgemäß vorgesehene Anschlag begrenzt exakt die diesbezüglich konstruktiv vorgegebenen Verformungs- und Belastungswerte beim Fahrerhaus-Kippen.

Nachstehend ist die erfindungsgemäße Lösung anhand eines in der Zeichnung dargestellten Ausführungsbeispiels näher erläutert. In der Zeichnung zeigen:
- Fig. 1: eine Ausführungsform der erfindungsgemäßen vorderen Fahrerhaus-Lagerung in Seitenansicht bei in Fahrstellung befindlichem Fahrerhaus, wobei an der zugehörigen Lagerkonsole der Übersichtlichkeit wegen eine vordere Seitenwange weggelassen wurde,
- Fig. 2: einen Schnitt durch die Darstellung gemäß Fig. 1 entlang der dort eingezeichneten Schnittlinie 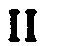 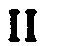 - 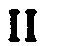 , und
- Fig. 3: die Fahrerhaus-Lagerung gemäß Fig. 1 in einer Zuordnung ihrer Teile während eines Fahrerhaus-Kippvorganges.

In der Zeichnung ist das kippbare Fahrerhaus eines Lastkraftwagens durch eine dessen Boden 1 folgende Linie angedeutet. Der Rahmen 2 des Fahrzeuges ist ebenfalls nur durch eine Linie angedeutet. Die vordere Lagerung für das kippbare Fahrerhaus umfaßt wenigstens zwei am Fahrzeugrahmen 2 befestigte Lagerkonsolen 3, an denen das Fahrerhaus über auf zueinander fluchtenden Lagerachsen 4 angeordnete elastische Lager 5 abgestützt ist, die in am Fahrerhaus-Boden 1 befestigten Lagerschalen 6 aufgenommen sind.

Die in der dargestellten Ausführungsform beispielhaft verwendete Lagerkonsole 3 setzt sich aus drei Einzelteilen zusammen, nämlich einem einteiligen Lagerbügel 7 und zwei seitlich außen an dessen Dach 8 befestigten Seitenwangen 9, 10. In den beiden Seitenwangen 9, 10 zueinander fluchtend gegebene Durchgangsbohrungen 11, 12 dienen zur Hindurchführung einer Spannschraube 13, die als Lagerachse des vorderen Fahrerhaus-Lagers fungiert und im dargestellten Beispiel über eine Lagerhülse 14 darauf drehbar das elastische Lager 5 über dessen Zentralrohr 15 lagert.

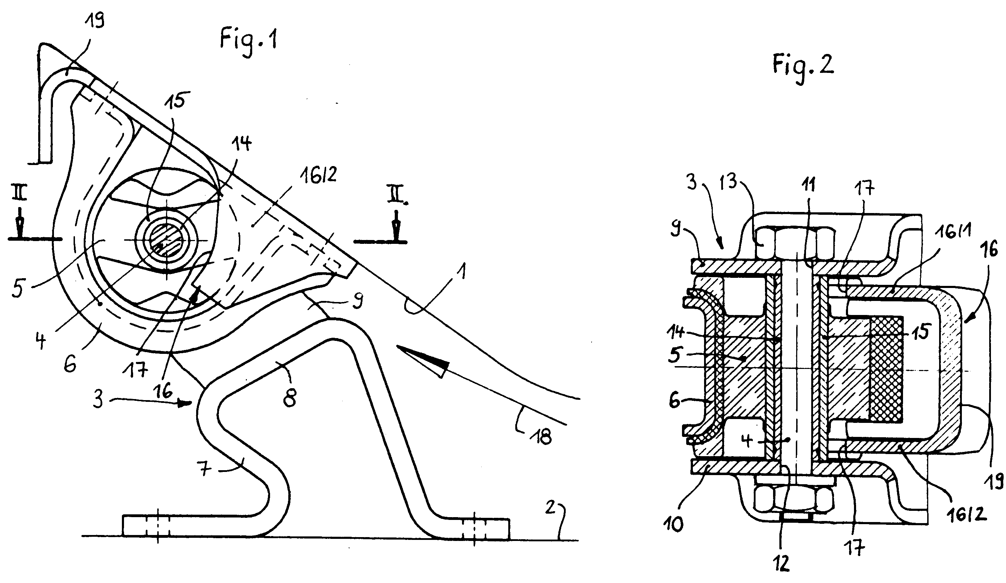

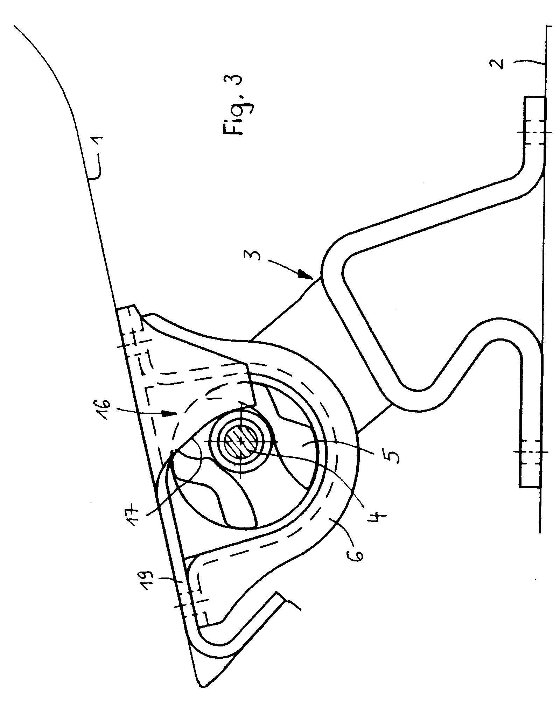

Entsprechend der Lehre der Erfindung ist im Bereich eines solchen Fahrerhaus-Lagers, insbesondere jedem derselben, ein ortsfest in Bezug auf den Fahrerhaus-Boden 1 angeordneter Anschlag 16 vorgesehen, der mit seiner Anschlagfläche 17 bei in Fahrstellung befindlichem Fahrerhaus die Lagerachse 4 bzw. das Zentralrohr 15 des elastischen Lagers 5 mit geringem Abstand hintergreift - siehe Fig. 1. Dieser Anschlag 16 ist so angeordnet, daß er das Einfedern des Fahrerhauses nicht behindert, aber beim Kippvorgang des Fahrerhauses zusammen mit diesem unter der Krafteinwirkung eines Kippzylinders in dessen in der Zeichnung durch einen Pfeil 18 angedeuteten Kraftrichtung verschiebbar ist, nach kurzer Wegstrecke an der Lagerachse 4 bzw. dem Zentralrohr 15 des elastischen Lagers 5 zur Anlage kommt und dort beim Weiterkippen des Fahrerhauses abgestützt bleibt - siehe Fig. 3. Der Abstand zwischen Anschlagfläche 17 am Anschlag 16 und Außenkontur Lagerachse 4 bzw. Zentralrohr 15 des elastischen Lagert 5 ist bei in Fahrstellung befindlichem Fahrerhaus kleiner/gleich dem konstruktiv vorgegebenen zulässigen Verformungsweg des elastischen Lagers 5.

Der Anschlag 16 mit seiner Anschlagfläche 17 ist auf verschiedene Weise realisierbar. So kann er beispielsweise durch ein außen an der Lagerschale 6 angeordnetes Stützblech gebildet sein, daß entweder einstückig mit der Lagerschale 6 ausgebildet ist oder als vorgefertigtes Einzelteil an der Lagerschale 6 befestigt, entweder angeschweißt oder angeschraubt ist. Im dargestellten Ausführungsbeispiel ist der Anschlag 16 durch ein Teil eines Stützbügels 19 gebildet, der zusammen mit der Lagerschale 6 am Fahrerhaus-Boden 1 befestigt ist. Dabei ist der Anschlag 16 an diesem Stützbügel 10 durch seitlich von dessen Basis abgebogene, zueinander parallel verlaufende Seitenwangen 16/1, 16/2 gebildet, an denen die Anschlagfläche 17 frontseitig gegeben ist.

Beim dargestellten Ausführungsbeispiel erfolgt beim Kippvorgang des Fahrerhauses dann, wenn der Anschlag 16 mit seiner Anschlagfläche 17 außen am Zentralrohr 15 des elastischen Lagers 5 zur Anlage kommt, keine Relativbewegung zwischen diesen beiden in Kontakt befindlichen Teilen, weil die Drehbewegung während des Kippvorganges zwischen der fahrgestellseitig fest zwischen den beiden Seitenwangen 9, 10 der Lagerkonsole 3 eingespannten Lagerhülse 14 und dem Zentralrohr 15 des elastischen Lagers erfolgt. Damit sind im dargestellten Fall mechanische Abnützungen der in Anlagekontakt kommenden Teile von vornherein vermeidbar.

## Patentansprüche

1. Vordere Lagerung für ein kippbares Fahrerhaus eines Lastkraftwagens, mit wenigstens zwei am Fahrzeug-Rahmen befestigten Lagerkonsolen (3), an denen das Fahrerhaus über auf zueinander fluchtenden Lagerachsen (4) angeordnete elastische Lager (5) abgestützt ist, die in am Fahrerhaus-Boden (1) befestigten Lagerschalen (6) aufgenommen sind, dadurch gekennzeichnet, daß im Bereich eines Fahrerhaus-Lagers ein ortsfest in Bezug auf den Fahrerhaus-Boden (1) angeordneter Anschlag (16) vorgesehen ist, der mit seiner Anschlagfläche (17) bei in Fahrstellung befindlichem Fahrerhaus die Lagerachse (4) bzw. ein diese umgebendes Zentralrohr (15) des elastischen Lagers (5) mit geringem Abstand derart hintergreift, daß er das Einfedern des Fahrerhauses nicht behindert, aber beim Kippvorgang des Fahrerhauses zusammen mit diesem unter der Krafteinwirkung eines Kippzylinders in dessen Kraftrichtung (18) verschiebbar ist, nach kurzer Wegstrecke an der Lagerachse (4) bzw. dem Lager-Zentralrohr (15) zur Anlage kommt und dort beim Weiterkippen des Fahrerhauses abgestützt bleibt.

2. Fahrerhaus-Lagerung nach Anspruch 1, dadurch gekennzeichnet, daß der Anschlag (16) durch ein außen an der Lagerschale (6) angeordnetes Stützblech gebildet ist.

3. Fahrerhaus-Lagerung nach Anspruch 2, dadurch gekennzeichnet, daß das Stützblech einstückig mit der Lagerschale (6) ausgebildet ist.

4. Fahrerhaus-Lagerung nach Anspruch 2, dadurch gekennzeichnet, daß das Stützblech als vorgefertigtes Einzelteil an der Lagerschale (6) befestigt, entweder angeschweißt oder angeschraubt ist.

5. Fahrerhaus-Lagerung nach Anspruch 1, dadurch gekennzeichnet, daß der Anschlag (16) durch ein Teil eines Stützbügels (19) gebildet ist, der zusammen mit der Lagerschale (6) am Fahrerhaus-Boden (1) befestigt ist, wobei die Anschlagfläche (17) an Seitenwangen (16/1, 16/2) gegeben ist, die an der Basis des Stützbügels (19) seitlich parallel zueinander verlaufend abgebogen sind.

6. Fahrerhaus-Lagerung nach einem der vorhergehenden Ansprüche, dadurch gekennzeichnet, daß der Abstand zwischen Anschlagfläche (17) am Anschlag (16) und Außenkontur Lagerachse (4) bzw. Zentralrohr (15) des elastischen Lagers (5) bei in Fahrstellung befindlichem Fahrerhaus kleiner/gleich dem konstruktiv vorgegebenen zulässigen Verformungsweg des elastischen Lagers (5) ist.

## Claims

1. Front mounts for a tilting cab of a truck, with at least two mount consoles (3) attached to the vehicle frame, at which mount consoles the cab is supported via elastic bearings (5) that are arranged on bearing shafts (4) aligned relative to each other and are supported in bearing shells (6) attached to the vehicle floor (1), characterised in that in the area of a cab mount a stop (16) is provided which is fixed in relation to the vehicle floor (1) and, when the cab is in driving position, grips with its stop face (17), on the rear side and at a short distance, the bearing shaft (4) and a central tube (15) of the elastic bearing (5) which central tube (15) encloses said bearing shaft (4) so that said stop (16) does not impede the cab's spring compression, but during cab tilting operations and at the application of force from a tilt cylinder can be shifted together with the cab in the direction of the force (18) from said tilt cylinder and, after a short distance, contacts the bearing shaft (4) and the bearing central tube (15) and remains supported there if the cab is tilted further.

2. Cab mounts according to Claim 1, characterised in that the stop (16) is formed by a supporting metal plate arranged on the outside of the bearing shell (6).

3. Cab mounts according to Claims 2, characterised in that the supporting metal plate is made in one piece together with the bearing shell (6).

4. Cab mounts according to Claim 2, characterised in that the supporing metal plate is a prefabricated single piece and attached, ie welded or bolted on, to the bearing shell (6).

5. Cab mounts according to Claim 1, characterised in that the stop (16) is formed by a part of a support bow (19) which, together with the bearing shell (6), is attached to the cab floor (1), whereby the stop face (17) is provided on side walls (16/1, 16/2) which run parallel to each other and are curved at the base of the support bow (19).

6. Cab mounts according to one of the foregoing Claims, characterised in that, when the cab is in driving position, the distance between the stop face (17) on the stop (16) and the outer contour of the bearing shaft (4) and of the central tube (15) of the elastic bearing (5) is smaller than/equal to the structurally determined, permissible deformation of the elastic bearing (5).

## Revendications

1. Montage antérieur de palier pour une cabine de conducteur basculante d'un camion, avec au moins deux consoles de palier (3) fixées sur le châssis du véhicule, consoles sur lesquelles la cabine de conducteur prend appui au moyen de paliers élastiques (5) disposés sur des axes de palier (4) qui sont en alignement l'un avec l'autre, paliers qui sont logés dans des coquilles de palier (6) fixées sur le plancher (1) de la cabine de conducteur,
caractérisé en ce que
dans la zone d'un palier de cabine de conducteur, on prévoit une butée (16), disposée à poste fixe par rapport au plancher (1) de la cabine de conducteur, butée qui vient en prise par derrière par sa surface de butée (17), quand la cabine de conducteur se trouve dans la position de marche, avec l'axe de palier (4) ou avec un tube central (15) du palier élastique (5), entourant cet axe, avec un faible écartement, d'une manière telle que ne soit pas empêchée la compression élastique de la cabine de conducteur, mais que lors du processus de basculement de la cabine de conducteur elle puisse coulisser en même temps que celle-ci sous l'action des forces exercées par un vérin de basculement, dans le sens de ces forces (18), et vienne en butée, après un court trajet, sur l'axe de palier (4) ou sur le tube central de palier (15) et reste en appui à cet endroit quand la cabine de conducteur continue à basculer.

2. Montage de palier pour cabine de conducteur selon la revendication 1,
caractérisé en ce que
la butée (16) est formée par une tôle d'appui disposée à l'extérieur sur la coquille de palier (6).

3. Montage de palier pour cabine de conducteur selon la revendication 2,
caractérisé en ce que
la tôle d'appui est constituée d'une seule pièce avec la coquille de palier (6).

4. Montage de palier pour cabine de conducteur selon la revendication 2,
caractérisé en ce que
la tôle d'appui est fixée en tant que pièce détachée préfabriquée, sur la coquille de palier (6), soit par soudage, soit par boulonnage.

5. Montage de palier pour cabine de conducteur selon la revendication 1,
caractérisé en ce que
la butée (16) est formée par une partie d'un étrier d'appui (19) qui est fixé en même temps que la coquille de palier (6) sur le plancher (1) de la cabine de conducteur, la surface de butée (17) se trouvant sur des joues latérales (16/1, 16/2) qui sont coudées à la base de l'étrier d'appui (19) en s'étendant latéralement de façon parallèle l'une à l'autre.

6. Montage de palier pour cabine de conducteur selon l'une des revendications précédentes,
caractérisé en ce que
l'intervalle entre la surface de butée (17) sur la butée (16) et le contour extérieur de l'axe de palier (4) ou du tube central (15) du palier élastique (5), quand la cabine de conducteur se trouve en position de marche, est inférieure ou égale au trajet de déformation acceptable, prédéfini par construction, du palier élastique (5).
